# EUROPÄISCHE PATENTSCHRIFT

(11) **EP 2 104 015 B1**
(45) Veröffentlichungstag und Bekanntmachung des Hinweises auf die Patenterteilung: **27.06.2018**
(21) Anmeldenummer: 09003720.1
(22) Anmeldetag: 16.03.2009
(51) Int. Cl.: G05D 23/13

(54) **Thermostatventil mit integriertem Kurzschlussventil**
Thermostatic valve with integrated bypass valve
Soupape à thermostat dotée d'une soupape de dérivation intégrée

(30) Priorität: 17.03.2008 DE 102008015030
(43) Veröffentlichungstag der Anmeldung: 23.09.2009
(73) Patentinhaber: MAHLE Behr Kornwestheim GmbH, 70806 Kornwestheim (DE)
(72) Erfinder: Auweder, Andreas, 71665 Vaihingen (DE); Mößner, Karin, 71686 Remseck (DE)
(74) Vertreter: Grauel, Andreas

(56) Entgegenhaltungen:
- WO-A1-95/33920
- WO-A1-2007/040130
- CA-A1- 2 646 233

## Beschreibung

Die Erfindung betrifft ein Thermostatventil mit einem Hauptventil und einem Kurzschlussventil, welche eine Mischkammer begrenzen, einem in der Mischkammer angeordneten thermostatischen Arbeitselement, umfassend ein Gehäuse und einen relativ zu dem Gehäuse bewegbaren Arbeitskolben, einem von dem Gehäuse oder dem Arbeitskolben entgegen der Kraft einer Rückstellfeder mitzunehmenden Ventilelement und einem die Rückstellfeder aufnehmenden Widerlager.

Ein Thermostateinsatz ist aus CA 2 646 233 A1, WO95/33920 A1 oder DE 10 2005 036 647 A1 bekannt. Ein derartiger Thermostateinsatz dient beispielsweise zur Aufteilung von Kühlmittelströmen für eine Motoraustrittsregelung, wobei in Abhängigkeit einer Kühlmitteltemperatur ein von einem Verbrennungsmotor kommender Kühlmittelstrom aufgeteilt werden kann, um den Kühlmittelstrom je nach Temperatur über einen Kühler oder ganz oder teilweise wieder direkt dem Verbrennungsmotor zuzuführen. Alternativ kann ein Thermostateinsatz auch für eine Motoreintrittsregelung eingesetzt werden.

Es ist bekannt, eine sogenannte Mischkammer zu bilden, welche in Richtung des Kühlers durch ein Hauptventil und in Richtung eines Kurzschlusskanals durch ein Kurzschlussventil begrenzt ist. Bei einer Motoraustrittsregelung wird die Mischkammer auch als Verteilerkammer bezeichnet. Im Zusammenhang mit der Erfindung werden jedoch sowohl eine Verteilerkammer bei einer Motoraustrittsregelung als auch eine Mischkammer bei einer Motoreintrittsregelung einheitlich als Mischkammer bezeichnet. Um ein schnelles Ansprechen des thermostatischen Arbeitselements zu erzielen, ist das Thermostatventil in der Mischkammer angeordnet, so dass es sowohl in einem Kurzschlussbetrieb, einem Mischbetrieb als auch in einem Kühlerbetrieb von dem Kühlmittelstrom umströmt wird.

Es ist Aufgabe der vorliegenden Erfindung, ein Thermostatventil zu schaffen, welches eine kompakte Bauform aufweist.

Diese Aufgabe wird gelöst durch ein Thermostatventil mit einem Hauptventil und einem Kurzschlussventil, welche eine Mischkammer begrenzen, einem in der Mischkammer angeordneten thermostatischen Arbeitselement, umfassend ein Gehäuse und einen relativ zu dem Gehäuse bewegbaren Arbeitskolben, einem von dem Gehäuse oder dem Arbeitskolben entgegen der Kraft einer Rückstellfeder mitzunehmenden Ventilelement und einem die Rückstellfeder aufnehmenden Widerlager, wobei das Widerlager als Ventilsitz für das Kurzschlussventil gestaltet ist und das Kurzschlussventil in Abhängigkeit einer Arbeitsstellung des Ventilelements offen oder verschlossen ist.

Das Kurzschlussventil ist somit in das Thermostatventil integriert. Dadurch wird eine besonders kompakte Baueinheit geschaffen, welche auf einfache Weise in ein Gegenstück beispielsweise an einem Kraftfahrzeug einsetzbar ist und/oder an einem Gegenstück anbringbar ist. Das thermostatische Arbeitselement ist dabei in der Mischkammer angeordnet, um eine gute Umströmung zu gewährleisten.

In einer Ausgestaltung der Erfindung ist das Ventilelement zumindest abschnittsweise als Schieber zum Verschließen des Kurzschlussventils gestaltet. Als Schieber wird dabei ein Element mit einem vorzugsweise röhrförmigen Bereich bezeichnet, welcher in oder auf ein komplementär gestaltetes Element geschoben werden kann, so dass Öffnungen des Gegenelements verschlossen werden. Das Widerlager ist in einer Ausgestaltung zumindest abschnittsweise hülsenförmig gestaltet, wobei der Schieber in die Hülse zum Verschließen des Kurzschlussventils eingeführt wird. In anderen Ausgestaltungen weist das Widerlager einen Stutzen auf, auf welchen der Schieber zum Verschließen des Kurzschlussventils aufsetzbar ist. Bei einer Gestaltung als Schieber kann das Widerlager zur Führung des Ventilelements genutzt werden, um so die Stabilität zu verbessern. Die Gestaltung als Schieber hat weiter den Vorteil, dass ab einer definierbaren Position das Ventil geschlossen werden kann, trotz Verschluss des Ventils jedoch eine weitere Verschiebung möglich bleibt.

In einer weiteren Ausgestaltung der Erfindung ist das thermostatische Arbeitselement durch ein Ventilgehäuse aufgenommen, wobei vorzugsweise an dem Ventilgehäuse ein Ventilsitz für das Hauptventil ausgebildet ist, welcher mit dem Ventilelement, insbesondere einem Ventilteller des Ventilelements zusammenarbeitet. In anderen Ausgestaltungen ist das Hauptventil mit einem Schieber gestaltet. Das Ventilgehäuse begrenzt die Mischkammer beispielsweise in Richtung des Kühlers.

In einer Weiterbildung der Erfindung ist das Widerlager mit dem Ventilgehäuse des thermostatischen Arbeitselements, insbesondere einem Gehäusedeckel, fest verbunden. Das Thermostatventil bildet dabei eine besonders kompakte Baueinheit, welche in einer Montage einsatzfertig vorbereitet und getestet werden kann. Durch die zunächst zweiteilige Fertigung des Widerlagers und des Ventilgehäuses sind die Rückstellfeder und das thermostatischen Arbeitselement in der Mischkammer auf einfache Weise integrierbar.

In einer weiteren Ausgestaltung der Erfindung weist das Widerlager sich in Längsrichtung erstreckende Rast- und/oder Verbindungsarme zur Verbindung mit dem Ventilgehäuse auf. Durch die Rast- und/oder Verbindungsarme wird ein gutes Umströmen des zwischen Widerlager und Ventilgehäuse angeordneten thermostatischen Arbeitselements sichergestellt.

In einer Weiterbildung sind die Rast- und/oder Verbindungsarme mit dem Ventilgehäuse durch Rastmittel rastend verbindbar. Dadurch ist eine einfache, werkzeuglos realisierbare und wieder lösbare Verbindung geschaffen.

In einer anderen Ausgestaltung weist das Ventilgehäuse einen die Mischkammer bildenden Abschnitt auf, welcher durch das Widerlager begrenzt ist. Vorzugsweise ist dabei an dem Ventilgehäuse eine Aufnahme ausgebildet, in welche das Widerlager abdichtend, beispielsweise mittels einer Profildichtung, einsetzbar ist. Das Ventilgehäuse kann dabei mit dem thermostatischen Arbeitselement und dem Widerlager, d.h. mit dem Hauptventil und dem Kurzschlussventil, auf eine einfach gestaltete Aufnahme, insbesondere eine. Bohrung, an einem Gegenstück aufgesetzt werden. An dem Gegenstück kann so eine mechanische Bearbeitung des Kurzschlusskanals für eine gute Abdichtung entfallen. Die Rückstellfeder ist vorzugsweise derart zwischen dem Ventilelement und dem Widerlager gelagert, dass sie zumindest teilweise in einem Kurzschlusskanal angeordnet ist. Bei einer anderen Ausführungsform ist die Rückstellfeder in der Mischkammer angeordnet, um eine besonders kleinbauende Einheit zu schaffen. Zudem ist eine Abdichtung gegen innere und äußere Leckage mit nur einer Dichtung möglich. Die Dichtung kann dabei als Axialdichtung gestaltet sein, so dass eine einfache Montage möglich ist.

In einer Weiterbildung der Erfindung ist das Widerlager als abdichtende Zwischenwand zwischen einem Kurzschlusskanal und der Mischkammer gestaltet. In einem Ausführungsbeispiel weist das Widerlager einen Kontaktabschnitt, insbesondere mit einem im Wesentlichen kreisförmigen Querschnitt, auf, welcher in einen entsprechenden Kanal einsetzbar ist, wobei an dem Widerlager mindestens ein Abdichtungselement, wie ein O-Ring oder dergleichen, zum Abdichten vorgesehen ist. Die äußere Form des Widerlagers, insbesondere des Kontaktabschnitts, kann dabei beliebig an ein vorhandenes Gegenstück angepasst werden.

In einer Ausgestaltung der Erfindung ist die Rückstellfeder derart zwischen dem Ventilelement und dem Widerlager gelagert, dass sie zumindest teilweise in einem Kurzschlusskanal angeordnet ist. Die Rückstellfeder ist beispielsweise als Spiralfeder gestaltet, so dass durch die Rückstellfeder ein Durchströmen des Kurzschlusskanals nicht wesentlich beeinträchtigt wird. Die Rückstellfeder wird dabei in Verlängerung einer Mittelachse des thermostatischen Arbeitselements angeordnet, so dass nur ein geringer Strömungswiderstand aufgrund der Rückstellfeder gegeben ist und auch in der Mischkammer wird aufgrund der Anordnung der Rückstellfeder im Kurzschlusskanal ein geringerer Strömungswiderstand erreicht.

In einer Weiterbildung der Erfindung weist das Widerlager einen hülsenförmigen Abschnitt zur Aufnahme der Rückstellfeder auf, wobei der hülsenförmigen Abschnitt mindestens eine durch den Schieber verschließbare Öffnung in Radialrichtung aufweist. Der hülsenförmige Abschnitt dient dabei sowohl zur Lagerung der Rückstellfeder als auch als Gegenstück für den Schieber des Kurzschlussventils.

Vorzugsweise ist das Ventilelement derart gestaltet, dass es sich zumindest teilweise in den hülsenförmigen Abschnitt erstreckt. Insbesondere weist das Ventilelement zu diesem Zweck in einer Ausgestaltung eine trichterförmige Anströmgeometrie auf, so dass eine druckverlustoptimierte Anströmung erzielt wird.

In einer anderen Ausgestaltung der Erfindung ist die Rückstellfeder derart zwischen dem Ventilelement und dem Widerlager gelagert, dass sie in der Mischkammer angeordnet ist. Dadurch wird eine besonders kleinbauende Einheit geschaffen. In einer Ausgestaltung stützt sich die Rückstellfeder dabei gegen den Ventilteller des Hauptventils ab.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine Schnittansicht eines erfindungsgemäßen Thermostatventils, wobei ein Hauptventil geschlossen und ein Kurzschlussventil geöffnet ist;
- Fig. 2:: eine Schnittansicht des Thermostatventils gemäß Fig. 1, wobei das Hauptventil und das Kurzschlussventil geöffnet sind;
- Fig. 3:: eine Schnittansicht des Thermostatventils gemäß Fig. 1, wobei das Hauptventil geöffnet und das Kurzschlussventil geschlossen ist;
- Fig. 4:: eine Schnittansicht eines erfindungsgemäßen Thermostatventils gemäß einem zweiten Ausführungsbeispiel, wobei ein Hauptventil geschlossen und ein Kurzschlussventil geöffnet ist;
- Fig. 5:: eine Schnittansicht des Thermostatventils gemäß Fig. 4, wobei das Hauptventil und das Kurzschlussventil geöffnet sind;
- Fig. 6:: eine Schnittansicht des Thermostatventils gemäß Fig. 4, wobei das Hauptventil geöffnet und das Kurzschlussventil geschlossen ist;
- Fig. 7:: eine Schnittansicht eines erfindungsgemäßen Thermostatventils gemäß einem dritten Ausführungsbeispiel, wobei ein Hauptventil geschlossen und ein Kurzschlussventil geöffnet ist;
- Fig. 8:: eine Schnittansicht des Thermostatventils gemäß Fig. 7, wobei das Hauptventil und das Kurzschlussventil geöffnet sind,
- Fig. 9:: eine Schnittansicht des Thermostatventils gemäß Fig. 7, wobei das Hauptventil geöffnet und das Kurzschlussventil geschlossen ist.
- Fig. 10:: eine Schnittansicht eines erfindungsgemäßen Thermostatventils gemäß einem vierten Ausführungsbeispiel, wobei ein Hauptventil geschlossen und ein Kurzschlussventil geöffnet ist;
- Fig. 11:: eine Schnittansicht des Thermostatventils gemäß Fig. 10, wobei das Hauptventil und das Kurzschlussventil geöffnet sind, und
- Fig. 12:: eine Schnittansicht des Thermostatventils gemäß Fig. 11, wobei das Hauptventil geöffnet und das Kurzschlussventil geschlossen ist.

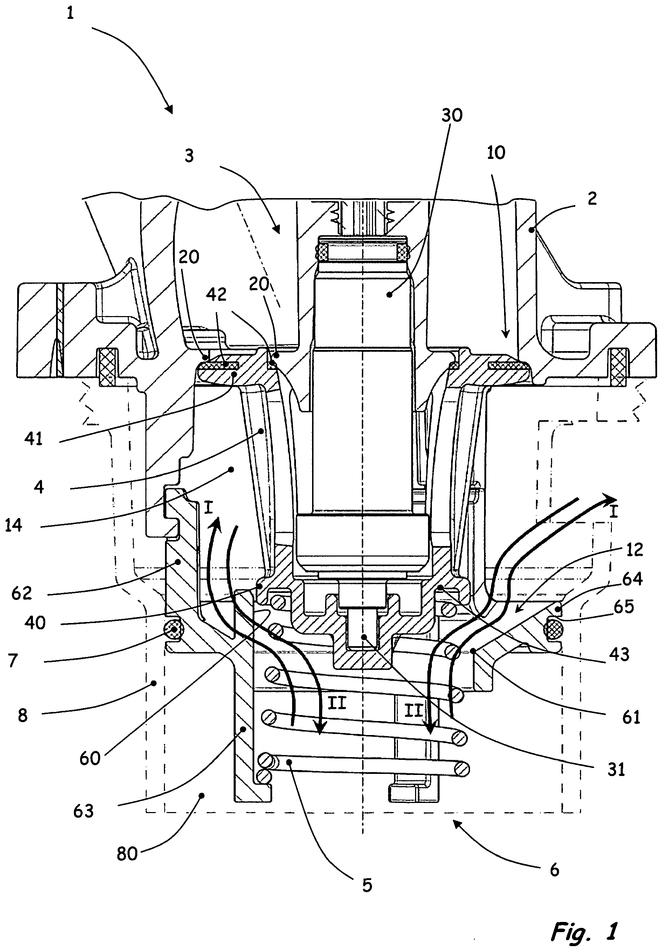

Fig. 1 bis 3 zeigen Schnittansichten eines erfindungsgemäßen Thermostatventils 1 mit einem Hauptventil 10 und einem Kurzschlussventil 12, welche eine Mischkammer 14 begrenzen. Das Thermostatventil 1 ist beispielsweise in einem nicht dargestellten Verbrennungsmotor eingebaut und kann zur temperaturabhängigen Steuerung eines Kühlmittelstroms in Form einer Motoreintrittsregelung (dargestellt durch Pfeile I) oder einer Motoraustrittsregelung (dargestellt durch Pfeile II) vorgesehen sein. Das dargestellte Thermostatventil 1 umfasst ein Ventilgehäuse 2, in welchem ein thermostatisches Arbeitselement 3 gelagert ist. Das thermostatische Arbeitselement 3 weist ein (nicht geschnitten dargestelltes) Gehäuse 30, sowie einen relativ zu dem Gehäuse 30 bewegbaren Arbeitskolben 31 auf. Das thermostatische Arbeitselement 3 ist nicht geschnitten dargestellt, so dass ein in dem Gehäuse 30 angeordneter Dehnstoff nicht sichtbar ist. Der Arbeitskolben 31 wird in Abhängigkeit einer Temperatur des Kühlmittelstroms und einer damit zusammenhängenden Ausdehnung des Dehnstoffs aus dem Gehäuse 30 ausgetrieben. Beim Austreiben des Arbeitskolbens 31 aus dem Gehäuse 30 wird ein Ventilelement 4 entgegen der Kraft einer Rückstellfeder 5 verschoben. Die Rückstellfeder 5 ist in dem dargestellten Ausführungsbeispiel in Verlängerung des Arbeitselements 3 und konzentrisch zu diesem angeordnet. Mit einem Ende stützt sich die Rückstellfeder 5 gegen das Ventilelement 4 ab, welches in dem dargestellten Ausführungsbeispiel zu diesem Zweck z.B. eine Nut 43 aufweist. Das andere Ende der Rückstellfeder 5 ist in einem Widerlager 6 gelagert, welches fest mit dem Ventilgehäuse 2 über Rast- und/oder Verbindungsarme 62 verbunden ist.

Das Hauptventil 10 ist in dem dargestellten Ausführungsbeispiel durch einen am Ventilgehäuse 2 gebildeten Ventilsitz 20 und einem zugehörigen Ventilteller 41 mit zwei Dichtelementen 42 gebildet.

Erfindungsgemäß ist das Widerlager 6 als Ventilsitz für das Kurzschlussventil 12 gestaltet, wobei in dem in Fig. 1 bis 3 dargestellten Ausführungsbeispiel das Widerlager 6 einen hülsenförmigen Abschnitt 60 mit Öffnung 61 in Radialrichtungen aufweist und das Ventilelement 4 in einem Abschnitt 40 als Schieber geschaltet ist, durch welchen die Öffnungen 61 in Radialrichtung verschließbar sind. Das Widerlager 6 ist dabei derart gestaltet, dass es in einem zugehörigen Strömungskanal, insbesondere einen Kurzschlusskanal 80 abdichtend einsetzbar ist. Das dargestellte Widerlager 6 weist hierzu einen Kontaktabschnitt 64 auf, welcher in den Kurzschlusskanal 80 abdichtend einsetzbar ist. Zur besseren Abdichtung können dabei, wie dargestellt, Dichtelemente 7 wie O-Ringe oder dergleichen vorgesehen sein. Zur Aufnahme der Dichtelemente 7 sind in dem dargestellten Ausführungsbeispiel an einer Mantelfläche des Kontaktabschnitts 64 Nuten 65 vorgesehen, in welche das Dichtelement 7 eingesetzt ist. Zur Lagerung der Rückstellfeder 5 ist in dem dargestellten Ausführungsbeispiel an dem Widerlager 6 in Verlängerung des hülsenförmigen Abschnitts 60 ein Käfig 63 vorgesehen, welcher sich in den Kurzschlusskanal 80 erstreckt, wobei der hülsenförmige Abschnitt 60 Richtung Mischkammer 14 Durchbrechungen aufweist, durch welche Kühlmittel fließen kann. Anstelle des Käfigs 63 ist es auch denkbar, den hülsenförmigen Abschnitt 60 länger zu gestalten, so dass eine Art Becher gebildet wird. Durch den Käfig 63 wird jedoch eine Durchströmung weniger beeinflusst.

Das Widerlager 6 ist weiter durch Rast- und/oder Verbindungsarme 62 mit dem Ventilgehäuse 2 verrastet. Durch die Verrastung ist ein einfacher Einbau möglich, wobei das Widerlager 6 und das Ventilgehäuse 2 in einer Montage miteinander verbunden werden. Die Rast- und/oder Verbindungsarme 62 beeinträchtigen aufgrund der dazwischen geschaffenen Zwischenräume eine Durchströmung der Mischkammer 14 und damit eine Umströmung des thermostatischen Arbeitselements 3 nur unwesentlich.

Durch einen Pfeil I ist ein Kühlmittelstrom bei einer Motoreintrittsregelung dargestellt. Die Pfeile II zeigen dagegen einen Kühlmittelstrom bei einer Motoraustrittsregelung. In der in Figur 1 dargestellten Ventilstellung ist das Hauptventil 10 geschlossen, wobei ein Kühlmittelstrom durch das Kurzschlussventil 12 fließen kann. Bei Erhöhung einer Temperatur des Kühlmittelstroms wird der in dem Gehäuse 30 geordnete Dehnstoff erwärmt, so dass der Arbeitskolben 31 aus dem Gehäuse 30 ausgetrieben wird. Dabei öffnet sich das Hauptventil 10.

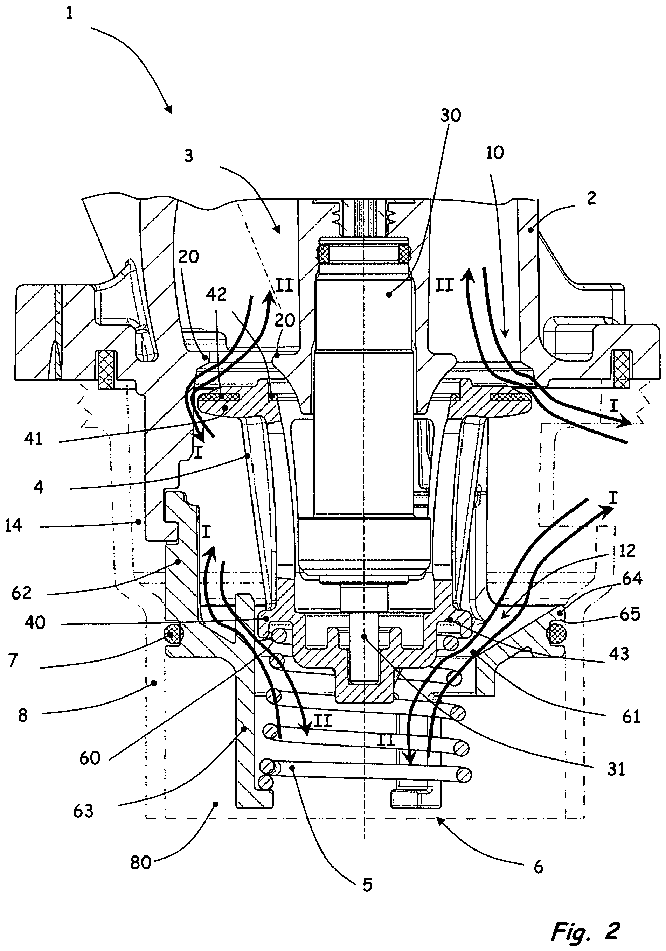

Figur 2 zeigt schematisch das Thermostatventil 1 gemäß Figur 1, wobei ein Mischbetrieb vorliegt, das heißt, dass sowohl das Hauptventil 10 als auch das Kurzschlussventil 12 geöffnet sind. Bei einer durch Pfeile I dargestellten Motoreintrittsregelung wird dabei einem nicht dargestellten Verbrennungsmotor sowohl von einem ebenfalls nicht dargestellten Kühler kommendes Kühlmittel über das Hauptventil 10 als auch nicht über den Kühler geflossenes Kühlmittel über das Kurzschlussventil 12 zugeführt.

Sofern das Thermostatventil 1 in einer Motoraustrittsregelung verwendet wird, wird der Kühlmittelstrom, wie durch Pfeile II dargestellt, aufgeteilt, wobei ein Teil des Kühlmittelstroms über das Hauptventil 10 zu einem nicht dargestellten Kühler und ein Teil des Kühlmittelstroms über das Kurzschlussventil 12 abgeführt wird. Bei einer weiteren Erwärmung des Kühlmittelstroms wird der Arbeitskolben 31 weiter aus dem Gehäuse 30 ausgetrieben, so dass das Kurzschlussventil 12 geschlossen wird.

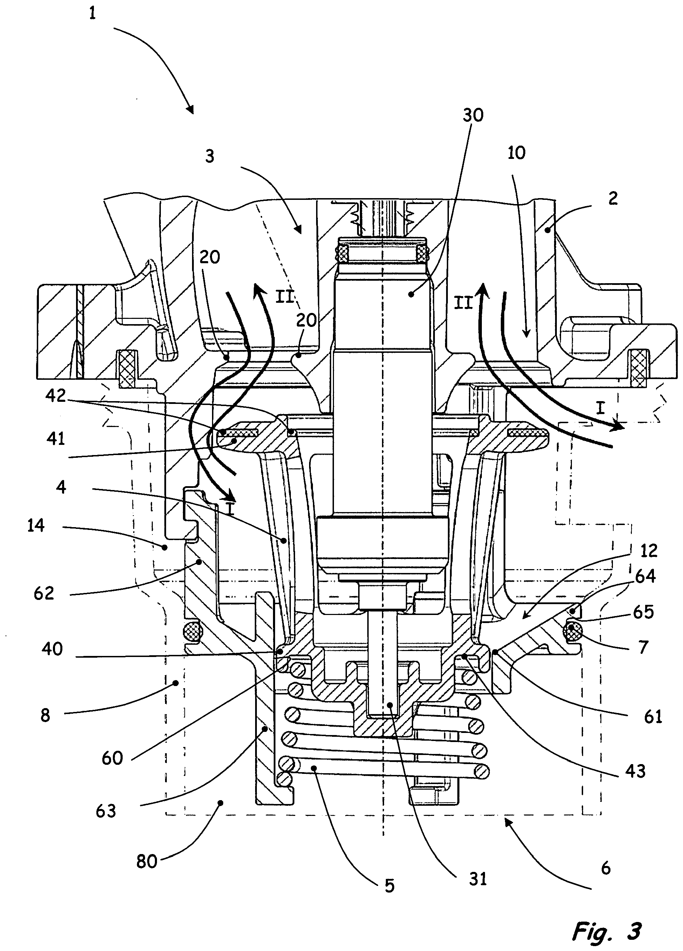

Figur 3 zeigt das Thermostatventil 1 gemäß Figur 1 in einem Kühlerbetrieb, wobei das Kurzschlussventil 12 vollständig durch den Schieber 40 des Ventilelements 4 geschlossen ist. Der gesamte Kühlmittelstrom fließt dabei über das Hauptventil 10, wobei durch Pfeile I ein Kühlmittelstrom bei einer Motoreintrittsregelung und durch Pfeile II ein Kühlmittelstrom bei einer Motoraustrittsregelung dargestellt ist.

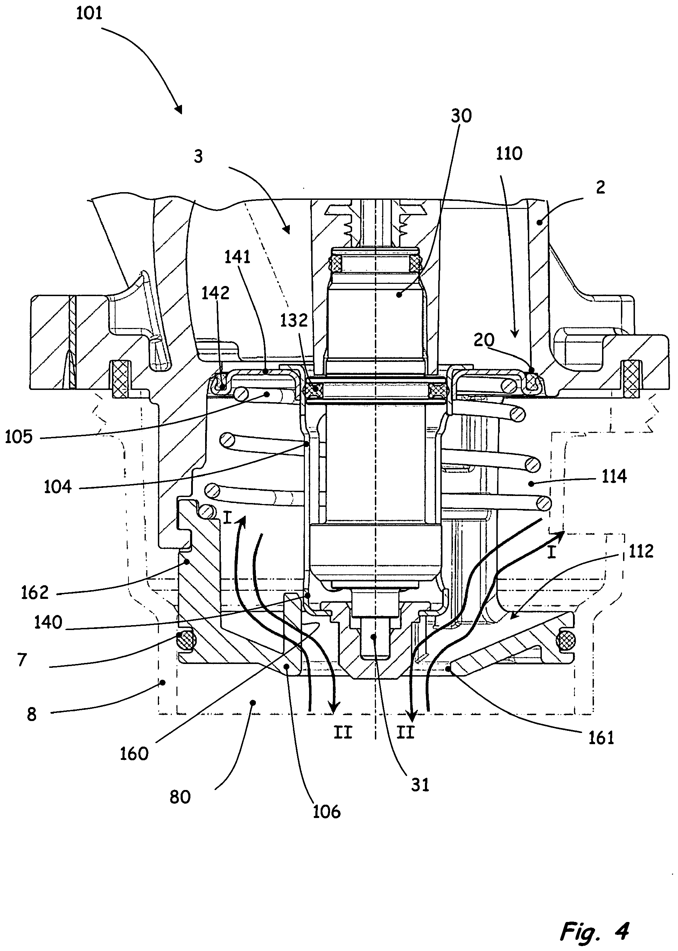

In den Figuren 4 bis 6 ist ein weiteres Ausführungsbeispiel eines erfindungsgemäßen Thermostatventils 101 in geschnitten Darstellungen gezeigt. Das Thermostatventil 101 ist ähnlich dem Thermostatventil 1 gemäß den Figuren 1 bis 3 und für gleiche Bauteile werden einheitliche Bezugszeichen verwendet. Auf eine detaillierte Beschreibung dieser Bauteile wird verzichtet. Bei dem Thermostatventil 101 ist eine Rückstellfeder 105 in einer durch ein Hauptventil 110 und ein Kurzschlussventil 112 gebildeten Mischkammer 114 angeordnet. Die Rückstellfeder 105 stützt sich dabei an einem als Ventilteller 141 des Hauptventils 110 gestalteten Ende des Ventilelements 104 ab. Durch Dichtringe 132, 142 wird das Hauptventil 110 flüssigkeitsdicht geschlossen. Ein Widerlager 106 für die Rückstellfeder 105 ist als Zwischenwand gestaltet, die abdichtend in ein entsprechendes Gegenstück 8 eingebracht. Das Widerlager 106 ist über Rast- und/oder Verbindungsarme 162 mit dem Ventilgehäuse 2 verrastet. Das Widerlager 106 weist einen hülsenförmigen Abschnitt 160 auf, in welchem das Ventilelement 104 eingesetzt ist, wobei der hülsenförmige Abschnitt 160 Richtung Mischkammer 114 Durchbrechungen aufweist, durch welche Kühlmittel fließen kann. Das Ventilelement 104 ist dabei soweit aus dem hülsenförmigen Abschnitt 160 heraus in Richtung des Hauptventils 110 verschiebbar, dass in Axialrichtung noch Spaltöffnungen 161 verbleiben, durch welche in dem in Figur 4 dargestellten Kurzschlussbetrieb Kühlmittel strömen kann. Durch die Pfeile I ist dabei ein Kühlmittelstrom bei einer Motoreintrittsregelung, durch die Pfeile II ein Kühlmittelstrom bei einer Motoraustrittsregelung dargestellt. Bei einer Erwärmung des in dem Gehäuse 30 des thermostatischen Arbeitselements 3 angeordneten Dehnstoffs, wird der Arbeitskolben 31 aus dem Gehäuse 30 ausgetrieben, so dass das Ventilelement 104 verschoben wird.

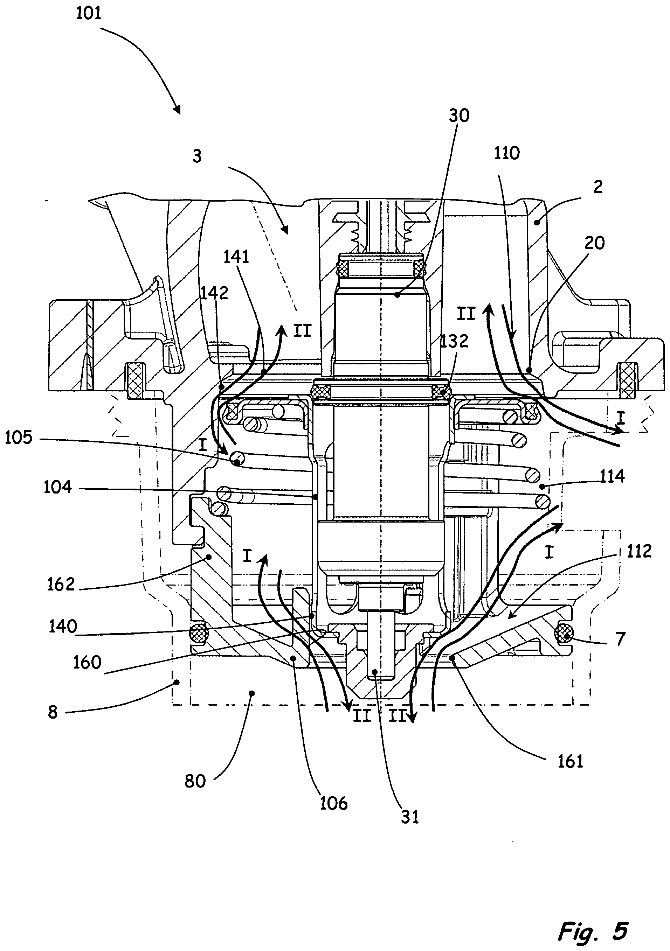

Figur 5 zeigt das Thermostatventil 101 gemäß Figur 4 bei einem Mischbetrieb, wobei sowohl das Hauptventil 110 als auch das Kurzschlussventil 112 geöffnet sind. Durch die Pfeile I ist dabei eine Strömungsrichtung bei einer Motoreintrittsregelung, durch die Pfeile II eine Strömungsrichtung bei einer Motoraustrittsregelung dargestellt.

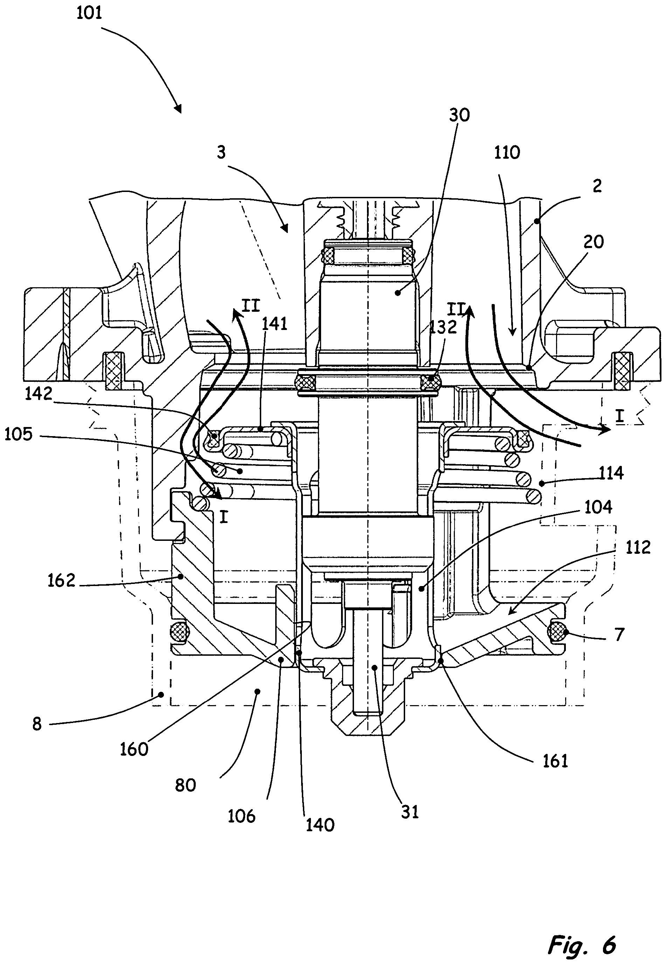

Figur 6 zeigt das Thermostatventil 101 bei einem Kühlerbetrieb, wobei das Hauptventil 110 geöffnet ist und das Kurzschlussventil 112 geschlossen ist. Das Ventilelement 104 weist erfindungsgemäß einen als Schieber 140 gestalteten Abschnitt auf, durch welchen die Spaltöffnungen 161 und damit das Kurzschlussventil 112 im Kühlerbetrieb verschließbar sind.

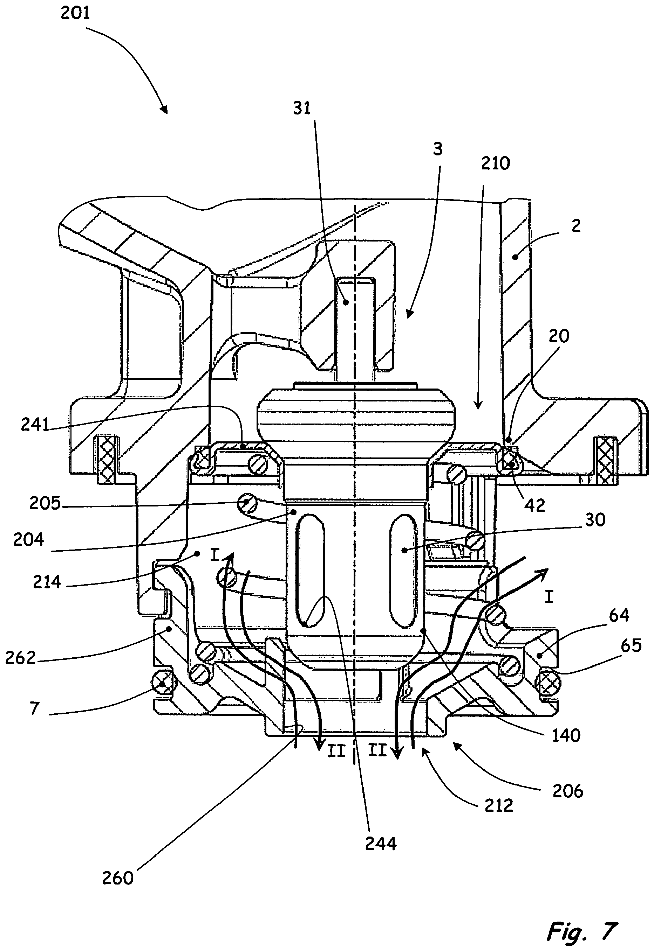

In den Figuren 7 bis 9 ist ein weiteres Ausführungsbeispiel eines erfindungsgemäßen Thermostatventils 201 in Schnittansichten dargestellt. Das Thermostatventil 201 ist ähnlich dem Thermostatventil 1 gemäß den Figuren 1 bis 3 und für gleiche Bauteile werden einheitliche Bezugszeichen verwendet. Auf eine detaillierte Beschreibung dieser Bauteile wird verzichtet. Das dargestellte Thermostatventil 201 umfasst ebenfalls ein Ventilgehäuse 2, in welchem ein thermostatisches Arbeitselement 3 mit einem Gehäuse 30 und einem Arbeitskolben 31 gelagert ist. Der Arbeitskolben 31 wird in Abhängigkeit einer Temperatur des Kühlmittelstroms und einer damit zusammenhängenden Ausdehnung des Dehnstoffs aus dem Gehäuse 30 ausgetrieben. Im Unterschied zu dem Ausführungsbeispiel der Fig. 1 bis 3 ist bei dem Ausführungsbeispiel gemäß Fig. 7 bis 9 der Arbeitskolben 31 ortsfest in dem Ventilgehäuse 2 gelagert. Beim Austreiben des Arbeitskolbens 31 wird somit das Gehäuse 30 relativ zu dem Arbeitskolben 31 verschoben. Das Gehäuse 30 ist von einem als Mantelgehäuse ausgebildeten Ventilelement 204 aufgenommen und mit diesem fest verbunden und/oder mit diesem als gemeinsame Baueinheit ausgebildet, so dass beim Verschieben des Gehäuses 30 das Ventilelement 204 entgegen der Kraft einer Rückstellfeder 205 verschoben wird. Das Mantelgehäuse des Ventilelements 204 weist dabei vorzugsweise wie dargestellt Unterbrechung 244 auf, um eine gute Umströmung des in der Mischkammer 214 abgeordneten Gehäuses 30 des Arbeitselements 3 zu erzielen. Durch die Gestaltung der Unterbrechungen 244 ist eine Kalibrierung des Arbeitselements 3 möglich. Mit einem Ende stützt sich die Rückstellfeder 205 gegen das Ventilelement 204 ab, insbesondere gegen einen ein Hauptventil 210 verschließenden Ventilteller 241. Das andere Ende der Rückstellfeder 205 ist in einem Widerlager 206 gelagert, welches fest mit dem Ventilgehäuse 2 über Rast- und/oder Verbindungsarme 262 verbunden ist. Entsprechend den Ausführungsbeispielen gemäß den Fig. 1 bis 6 weist auch das Widerlager 206 einen Kontaktabschnitt 64 auf, welcher in einen in den

Fig. 7 bis 9 nicht dargestellten Kurzschlusskanal einsetzbar ist. An dem Kontaktabschnitt 64 ist für eine gute Abdichtung vorzugsweise wie dargestellt mindestens eine Nut 65 für ein Dichtelement 7 vorgesehen. Das Widerlager 206 weist weiter einen hülsenförmigen Abschnitt 260 auf, in welchen das Ventilelement 204 zumindest teilweise verschieblich eingesetzt ist, wobei der hülsenförmige Abschnitt 260 Richtung Mischkammer 214 Durchbrechungen aufweist, durch welche Kühlmittel fließen kann. Das Ventilelement 204 ist dabei soweit aus dem hülsenförmigen Abschnitt 260 heraus in Richtung des Hauptventils 210 verschiebbar, dass in dem in Figur 7 dargestellten Kurzschlussbetrieb Kühlmittel durch das geöffnete Kurzschlussventil 212 strömen kann. Durch die Pfeile I ist dabei ein Kühlmittelstrom bei einer Motoreintrittsregelung, durch die Pfeile II ein Kühlmittelstrom bei einer Motoraustrittsregelung dargestellt. Bei einer Erwärmung des in dem Gehäuse 30 des thermostatischen Arbeitselements 3 angeordneten Dehnstoffs, wird der Arbeitskolben 31 aus dem Gehäuse 30 ausgetrieben, so dass das Ventilelement 204 verschoben wird.

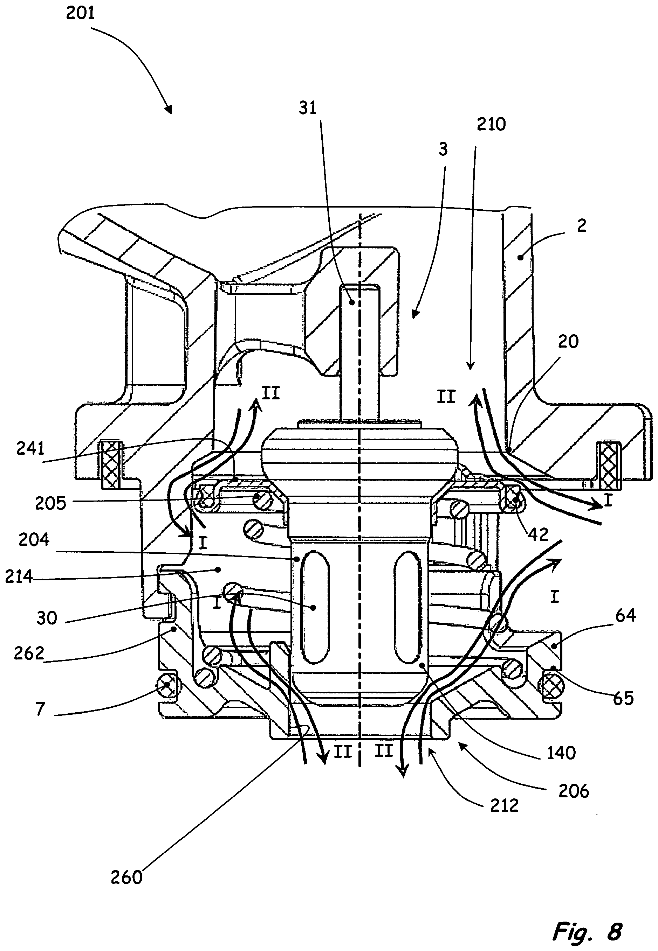

Figur 8 zeigt das Thermostatventil 201 gemäß Figur 7 bei einem Mischbetrieb, wobei sowohl das Hauptventil 210 als auch das Kurzschlussventil 212 geöffnet sind. Durch die Pfeile I ist dabei eine Strömungsrichtung bei einer Motoreintrittsregelung, durch die Pfeile II eine Strömungsrichtung bei einer Motoraustrittsregelung dargestellt.

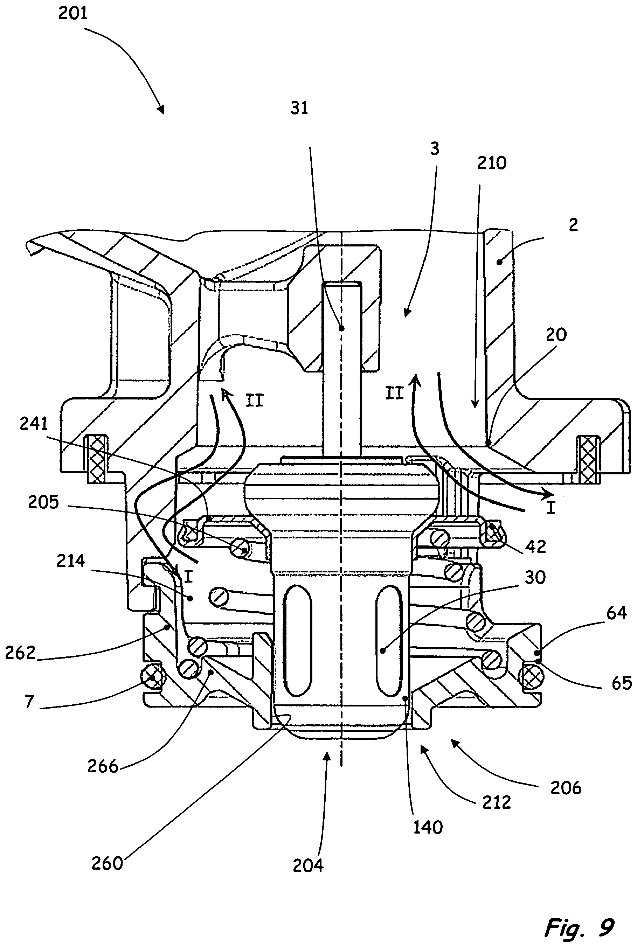

Figur 9 zeigt das Thermostatventil 201 bei einem Kühlerbetrieb, wobei das Hauptventil 210 geöffnet ist und das Kurzschlussventil 212 geschlossen ist. Das Ventilelement 204 weist erfindungsgemäß einen als Schieber 140 gestalteten Abschnitt auf, durch welchen das Kurzschlussventil 212 im Kühlerbetrieb verschließbar ist. Das Widerlager 206 wirkt in dem in Fig. 9 dargestellten Kühlerbetrieb als abdichtende Zwischenwand zwischen einem in Fig. 9 nicht dargestellten Kurzschlusskanal und der Mischkammer 214. Dabei ist die Rückstellfeder 205 an einem Trennwandbereich 266 des Widerlagers 206 abgestützt.

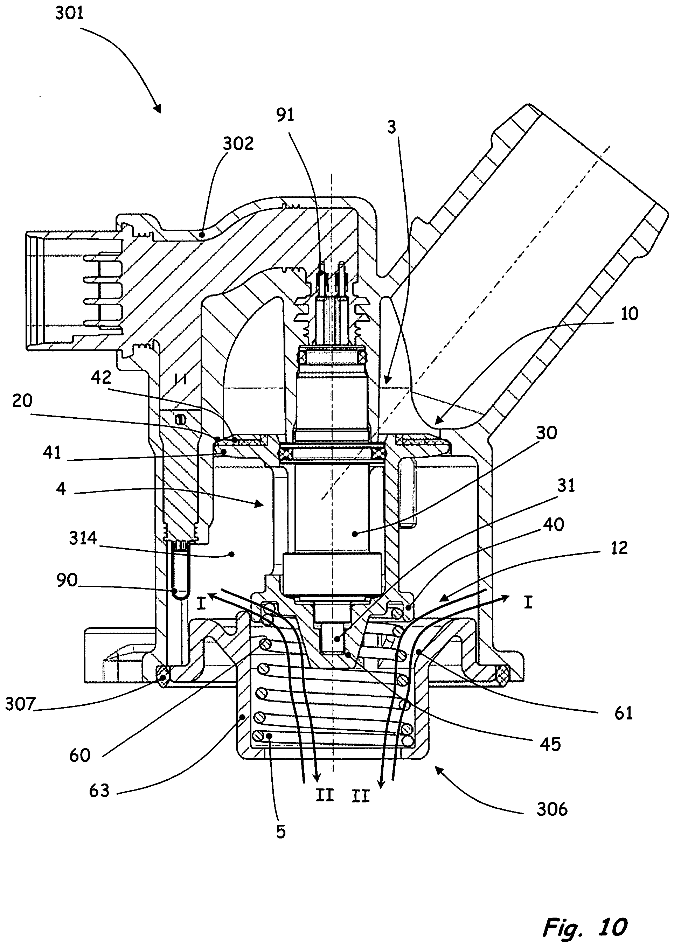

Die Figuren 10 bis 12 zeigen Schnittansichten eines weiteren Ausführungsbeispiels eines erfindungsgemäßen Thermostatventils 301. Das Thermostatventil 301 ist ähnlich dem Thermostatventil 1 gemäß den Figuren 1 bis 3 und für gleiche Bauteile werden einheitliche Bezugszeichen verwendet. Auf eine detaillierte Beschreibung dieser Bauteile wird verzichtet. Das dargestellte Thermostatventil 301 umfasst ebenfalls ein Ventilgehäuse 302, in welchem ein thermostatisches Arbeitselement 3 mit einem Gehäuse 30 und einem Arbeitskolben 31 gelagert ist. Bei dem Thermostatventil 301 handelt es sich um einen Kennfeldthermostaten, wobei in dem Ventilgehäuse 302 weiter ein Temperatursensor 90 vorgesehen ist, durch welchen die Temperatur in der Mischkammer 314 erfassbar ist. Zudem ist in dem Ventilgehäuse 302 ein Kennfeldstecker 91 vorgesehen, durch welchen ein in dem Gehäuse 30 des Arbeitselements 3 vorgesehener Dehnstoff erwärmt werden kann. Der Arbeitskolben 31 wird somit in Abhängigkeit einer Ansteuerung der Kennfeldstecker 91 und/oder einer Temperatur des Kühlmittelstroms und einer damit zusammenhängenden Ausdehnung des Dehnstoffs aus dem Gehäuse 30 ausgetrieben. Bei den Ausführungsbeispielen gemäß den Fig. 1 bis 9 können ebenfalls Kennfeldstecker 91 vorgesehen sein. Vorzugsweise sind die Kennfeldstecker 91 und der Temperatbvnursensor 90 jeweils in dem Ventilgehäuse 302 durch Umspritzen integriert.

Im Unterschied zu dem Ausführungsbeispiel der Fig. 1 bis 3 ist bei dem Ausführungsbeispiel gemäß den Fig. 10 bis 12 die Mischkammer 314 durch einen Abschnitt des Ventilgehäuses 302 gebildet. Die Mischkammer 314 ist dabei in Richtung des Kurzschlusskanal durch ein Widerlager 306 begrenzt. Das Widerlager 306 ist abdichtend in das Ventilgehäuse 302 einsetzbar und mechanisch fest mit dem Ventilgehäuse 302 verbunden. Dabei wird das Ventilgehäuse 302 auch als Gehäusedeckel bezeichnet. Das Ventilgehäuse 302 ist mit dem eingesetzten Widerlager 306 an einem nicht dargestellten Gegenstück anbringbar. Das Gegenstück kann zu diesem Zweck beispielsweise eine Bohrung oder eine anders gestaltete Aufnahme aufweisen. Eine Dichtung 307, welche im Verbindungsbereich zwischen dem Ventilgehäuse 302 und dem Widerlager 306 vorgesehen ist, dient dabei einer Abdichtung sowohl gegen eine innere Leckage zwischen der Mischkammer 314 und dem Kurzschlusskanal, als auch gegen eine äußere Leckage. Das Widerlager 306 weist wie das Widerlager 6 gemäß Fig. 1 einen hülsenförmigen Abschnitt 60 mit Öffnung 61 in Radialrichtungen auf, welche durch einen als Schieber gestalteten Abschnitt 40 des Ventilelements 4 verschließbar sind, wobei der hülsenförmige Abschnitt 60 Richtung Mischkammer 314 Durchdringungen aufweist, durch welche Kühlmittel fließen kann. Ein an dem Widerlager 306 in Verlängerung des hülsenförmigen Abschnitts 60 vorgesehener Käfig 63 erstreckt sich nach einer Montage in den Kurzschlusskanal. Der Käfig 63 dient der Aufnahme der Rückstellfeder 5, so dass die Mischkammer 314 federfrei gestaltet ist. Ein sich in den Käfig 63 erstreckender Bereich 45 des Ventilelements 4, welcher mit dem Arbeitskolben 31 für eine Bewegungsübertragung wirkverbunden ist, ist in dem dargestellten Ausführungsbeispiel trichterförmig gestaltet. Dadurch wird eine druckverlustarme Anströmung erzielt.

Die Rückstellfeder 5 kann bei einer nicht dargestellten Ausführungsform auch in der Mischkammer 314 zwischen dem Widerlager 6 und dem Ventilelement 4 angeordnet sein, so dass eine besonders kleinbauende Einheit geschaffen wird.

In Fig. 10 ist ein Kurzschlussbetrieb dargestellt, wobei das Hauptventil 10 geschlossen und ein Kurzschlussventil 12 geöffnet ist. Durch die Pfeile I ist dabei ein Kühlmittelstrom bei einer Motoreintrittsregelung, durch die Pfeile II ein Kühlmittelstrom bei einer Motoraustrittsregelung dargestellt.

Beim Austreiben des Arbeitskolbens 31 aufgrund einer Erwärmung des Dehnstoffs wird das Ventilelement 4 entgegen der Kraft der Rückstellfeder 5 verschoben. Das Ventilelement 4 ist dabei so verschoben, dass ein Ventilteller 41 von einem Ventilsitz 20 wegbewegt wird.

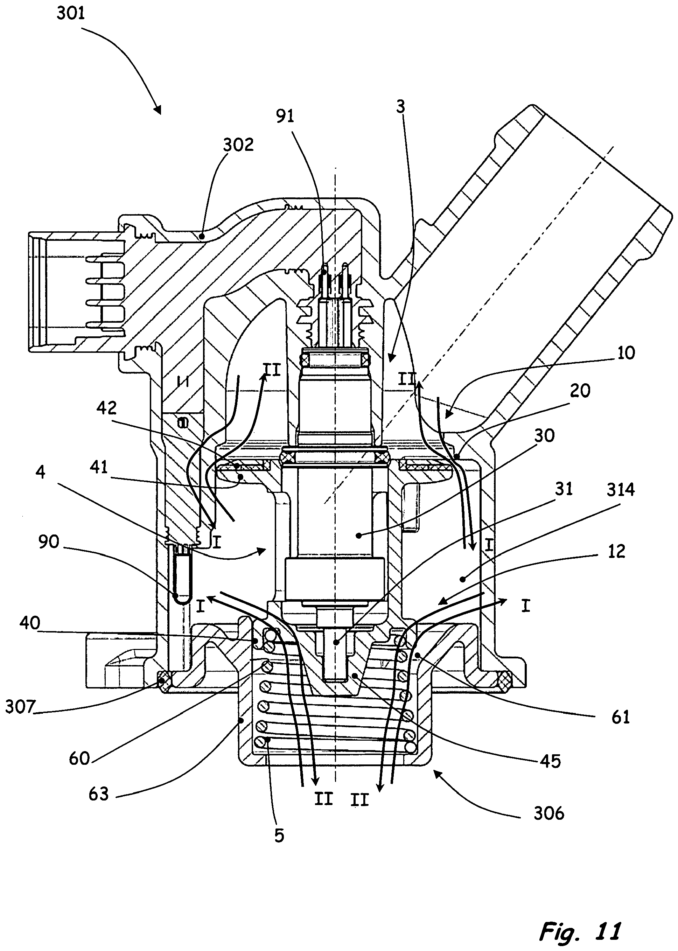

Figur 11 zeigt das Thermostatventil 301 gemäß Figur 10 bei einem Mischbetrieb, wobei sowohl das Hauptventil 10 als auch das Kurzschlussventil 12 geöffnet sind. Durch die Pfeile I ist dabei eine Strömungsrichtung bei einer Motoreintrittsregelung, durch die Pfeile II eine Strömungsrichtung bei einer Motoraustrittsregelung dargestellt.

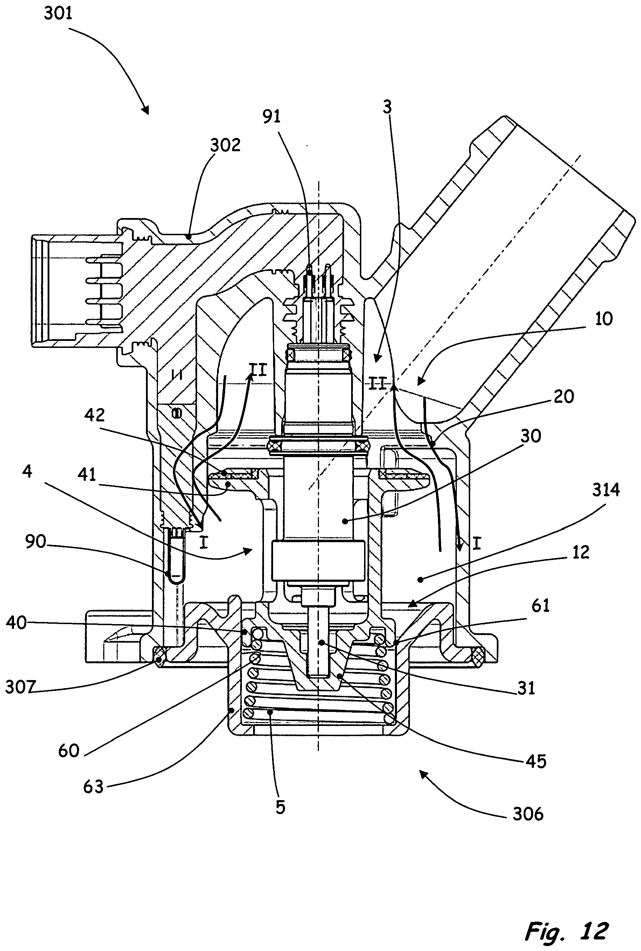

Figur 12 zeigt das Thermostatventil 301 bei einem Kühlerbetrieb, wobei das Hauptventil 10 geöffnet und das Kurzschlussventil 12 geschlossen ist. Die Öffnungen 61 des Widerlagers 306 sind dabei durch den als Schieber 40 gestalteten Abschnitt des Ventilelements verschlossen. Das Widerlager 306 wirkt in dem in Fig. 12 dargestellten Kühlerbetrieb als abdichtende Zwischenwand zwischen dem in Fig. 12 nicht dargestellten Kurzschlusskanal und der durch das Ventilgehäuse 302 gebildeten Mischkammer 314.

## Patentansprüche

1. Thermostatventil mit einem Hauptventil (10, 110, 210) und einem Kurzschlussventil (12, 112, 212), welche eine Mischkammer (14, 114, 214, 314) begrenzen, einem in der Mischkammer (14, 114, 214, 314) angeordneten thermostatischen Arbeitselement (3), umfassend ein Gehäuse (30) und einen relativ zu dem Gehäuse (30) bewegbaren Arbeitskolben (31), einem von dem Gehäuse (30) oder dem Arbeitskolben (31) entgegen der Kraft einer Rückstellfeder (5, 105, 205) mitzunehmenden Ventilelement (4, 104, 204) und einem die Rückstellfeder (5, 105, 205) aufnehmenden Widerlager (6, 106, 206, 306), **Dadurch gekennzeichnet, dass** das Widerlager (6, 106, 206, 306) als Ventilsitz für das Kurzschlussventil (12, 112, 212) gestaltet ist und das Kurzschlussventil (12, 112, 212) in Abhängigkeit einer Arbeitsstellung des Ventilelements (4, 104, 204) offen oder verschlossen ist und das Ventilelement (4, 104, 204) zumindest abschnittsweise als Schieber zum Verschließen des Kurzschlussventils (12, 112, 212) gestaltet ist, wobei der Schieber ein Element mit einem rohrförmigen Bereich ist, wobei das thermostatische Arbeitselement (3) durch ein Ventilgehäuse (2) aufgenommen ist und an dem Ventilgehäuses (2) ein Ventilsitz (20) für das Hauptventil (10, 110, 210) ausgebildet ist, welcher mit einem Ventilteller (41, 141, 241) des Ventilelements (4, 104, 204) zusammenarbeitet, wobei das Widerlager (6, 106, 206, 306) mit dem Ventilgehäuse (2) fest verbunden ist, wobei das Widerlager, (6, 106, 206) sich in Längsrichtung erstreckende Rast- und Verbindungsarme (62, 162, 262) zur Verbindung mit dem Ventilgehäuse (2) aufweist.

2. Thermostatventil nach Anspruch 1, **dadurch gekennzeichnet, dass** die Rast- und Verbindungsarme (62, 162, 262) mit dem Ventilgehäuse (2) durch Rastmittel verrastbar und wieder lösbar sind.

3. Thermostatventil nach Anspruch 1 oder 2, **dadurch gekennzeichnet, dass** das Ventilgehäuse (302) einen die Mischkammer (314) bildenden Abschnitt aufweist, welcher durch das Widerlager (306) begrenzt ist.

4. Thermostatventil nach einem der Ansprüche 1 bis 3, **dadurch gekennzeichnet, dass** das Widerlager (6, 106, 206, 306) als abdichtende Zwischenwand zwischen einem Kurzschlusskanal (80) und der Mischkammer (14, 114, 214, 314) gestaltet ist.

5. Thermostatventil nach einem der Ansprüche 1 bis 4, **dadurch gekennzeichnet, dass** das Widerlager (6, 106, 206) einen Kontaktabschnitt (64) aufweist, welcher in den Kurzschlusskanal (80) abdichtend einsetzbar ist, wobei an einer Mantelfläche des Kontaktabschnitts (64) mindestens ein Dichtelemente, insbesondere ein 0-Ring (7), vorgesehen ist.

6. Thermostatventil nach einem der Ansprüche 1 bis 5, **dadurch gekennzeichnet, dass** die Rückstellfeder (5) zwischen dem Ventilelement (4) und dem Widerlager (6, 306) gelagert ist, so dass sie zumindest teilweise in dem Kurzschlusskanal angeordnet ist.

7. Thermostatventil nach Anspruch 6, **dadurch gekennzeichnet, dass** das Widerlager (6, 306) einen hülsenförmigen Abschnitt (60) zur Aufnahme der Rückstellfeder (5) aufweist, wobei der hülsenförmigen Abschnitt (60) mindestens eine durch den Schieber (40) verschließbare Öffnung (61) in Radialrichtung aufweist.

8. Thermostatventil nach Anspruch 7, **dadurch gekennzeichnet, dass** das Ventilelement (4) sich zumindest teilweise in den hülsenförmigen Abschnitt (60) erstreckt.

9. Thermostatventil nach einem der Ansprüche 1 bis 8, **dadurch gekennzeichnet, dass** die Rückstellfeder (105, 205) zwischen dem Ventilelement (4) und dem Widerlager (106, 206) gelagert ist, so dass sie in der Mischkammer (114, 214) angeordnet ist.

10. Thermostatventil nach einem der Ansprüche 1 bis 9, **dadurch gekennzeichnet, dass** die Rückstellfeder (205) an einem Trennwandbereich (266) des Widerlagers (206) abgestützt ist.

## Claims

1. A thermostatic valve with a main valve (10, 110, 210) and a crossover valve (12, 112, 212) which delimit a mixing chamber (14, 114, 214, 314), a thermostatic working element (3) which is arranged in the mixing chamber (14, 114, 214, 314), comprising a housing (30) and a working piston (31) which is movable relative to the housing (30), a valve element (4, 104, 204) to be taken along by the housing (30) or the working piston (31) against the force of a return spring (5, 105, 205) and a counter bearing (6, 106, 206, 306) accepting the return spring (5, 105, 205), **characterised in that** the counter bearing (6, 106, 206, 306) is designed as a valve seat for the crossover valve (12, 112, 212) and the crossover valve (12, 112, 212) is open or closed depending on a working position of the valve element (4, 104, 204) and the valve element (4, 104, 204) is, at least in sections, designed as a slide for closing the crossover valve (12, 112, 212), wherein the slide is an element with a tubular region, wherein the thermostatic working element (3) is accepted by a valve housing (2) and a valve seat (20) for the main valve (10, 110, 210) is designed on the valve housing (2), the valve seat working together with a valve disk (41, 141, 241) of the valve element (4, 104, 204), wherein the counter bearing (6, 106, 206, 306) is firmly connected to the valve housing (2), wherein the counter bearing (6, 106, 206) has locking and connecting arms (62, 162, 262) extending in the longitudinal direction in order to be connected to the valve housing (2).

2. The thermostatic valve according to claim 1, **characterised in that** the locking and connecting arms (62, 162, 262) can be locked to the valve housing (2) and released again by locking means.

3. The thermostatic valve according to claim 1 or 2, **characterised in that** the valve housing (302) has a section forming the mixing chamber (314) which is delimited by the counter bearing (306).

4. The thermostatic valve according to one of claims 1 to 3, **characterised in that** the counter bearing (6, 106, 206, 306) is designed as a sealing partition wall between a bypass channel (80) and the mixing chamber (14, 114, 214, 314).

5. The thermostatic valve according to one of claims 1 to 4, **characterised in that** the counter bearing (6, 106, 206) has a contact section (64) which can be inserted into the bypass channel (80) in a sealing manner, wherein at least one sealing element, in particular an O-ring (7), is provided on a lateral surface of the contact section (64).

6. The thermostatic valve according to one of claims 1 to 5, **characterised in that** the return spring (5) is mounted between the valve element (4) and the counter bearing (6, 306), so that it is at least partially arranged inside the bypass channel.

7. The thermostatic valve according to claim 6, **characterised in that** the counter bearing (6, 306) has a sleeve-shaped section (60) for accepting the return spring (5), wherein the sleeve-shaped section (60) has at least one opening (61) in the radial direction which can be closed by the slide (40).

8. The thermostatic valve according to claim 7, **characterised in that** the valve element (4) extends at least partially into the sleeve-shaped section (60).

9. The thermostatic valve according to one of claims 1 to 8, **characterised in that** the return spring (105, 205) is mounted between the valve element (4) and the counter bearing (106, 206), so that it is arranged inside the mixing chamber (114, 214).

10. The thermostatic valve according to one of claims 1 to 9, **characterised in that** the return spring (205) is supported on a dividing wall section (266) of the counter bearing (206).

## Revendications

1. Vanne thermostatique comprenant une vanne principale (10, 110, 210) et une vanne de dérivation (12, 112, 212), vannes qui délimitent une chambre de mélange (14, 114, 214, 314), ladite vanne thermostatique comprenant un élément de travail thermostatique (3) disposé dans la chambre de mélange (14, 114, 214, 314), comprenant un boîtier (30) et un piston de travail (31) mobile par rapport au boîtier (30), comprenant un élément de vanne (4, 104, 204) devant être entraîné par le boîtier (30) ou par le piston de travail (31) en s'opposant à la force d'un ressort de rappel (5, 105, 205) et comprenant une contre-butée (6, 106, 206, 306) logeant le ressort de rappel (5, 105, 205), **caractérisée en ce que** la contre-butée (6, 106, 206, 306) est conçue comme siège de vanne pour la vanne de dérivation (12, 112, 212), et la vanne de dérivation (12, 112, 212) est ouverte ou fermée en fonction d'une position de travail de l'élément (4, 104, 204) de la vanne, et l'élément (4, 104, 204) de la vanne est conçu au moins partiellement comme un tiroir servant à la fermeture de la vanne de dérivation (12, 112, 212), où le tiroir est un élément ayant une zone de forme tubulaire, où l'élément de travail thermostatique (3) est logé par un boîtier de vanne (2), et un siège de vanne (20) prévu pour la vanne principale (10, 110, 210) est configuré sur le boîtier (2) de la vanne, siège de vanne qui fonctionne de façon conjointe avec une tête de vanne (41, 141, 241) de l'élément (4, 104, 204) de la vanne, où la contre-butée (6, 106, 206, 306) est reliée de façon solidaire au boîtier (2) de la vanne, où la contre-butée (6, 106, 206) présente des bras d'encliquetage et de liaison (62, 162, 262) s'étendant dans le sens de la longueur et servant à la liaison avec le boîtier (2) de la vanne.

2. Vanne thermostatique selon la revendication 1, **caractérisée en ce que** les bras d'encliquetage et de liaison (62, 162, 262) reliant au boîtier (2) de la vanne sont encliquetables et à nouveau détachables grâce à des moyens d'encliquetage.

3. Vanne thermostatique selon la revendication 1 ou 2, **caractérisée en ce que** le boîtier (302) de la vanne présente une partie formant la chambre de mélange (314), partie qui est délimitée par la contre-butée (306).

4. Vanne thermostatique selon l'une quelconque des revendications 1 à 3, **caractérisée en ce que** la contre-butée (6, 106, 206, 306) est formée comme une paroi intermédiaire assurant l'étanchéité entre un conduit de dérivation (80) et la chambre de mélange (14, 114, 214, 314).

5. Vanne thermostatique selon l'une quelconque des revendications 1 à 4, **caractérisée en ce que** la contre-butée (6, 106, 206) présente une partie faisant contact (64), partie qui peut être insérée, de façon étanche, dans le conduit de dérivation (80), où il est prévu au moins un élément d'étanchéité, en particulier un joint torique (7), sur une surface latérale de la partie faisant contact (64).

6. Vanne thermostatique selon l'une quelconque des revendications 1 à 5, **caractérisée en ce que** le ressort de rappel (5) est logé entre l'élément (4) de la vanne et la contre-butée (6, 306), de sorte que ledit ressort de rappel est disposé au moins partiellement dans le conduit de dérivation.

7. Vanne thermostatique selon la revendication 6, **caractérisée en ce que** la contre-butée (6, 306) présente une partie (60) en forme de manchon servant au logement du ressort de rappel (5), où la partie (60) en forme de manchon présente au moins, dans le sens radial, une ouverture (61) pouvant être fermée par le tiroir (40).

8. Vanne thermostatique selon la revendication 7, **caractérisée en ce que** l'élément (4) de la vanne s'étend au moins partiellement dans la partie (60) en forme de manchon.

9. Vanne thermostatique selon l'une quelconque des revendications 1 à 8, **caractérisée en ce que** le ressort de rappel (105, 205) est logé entre l'élément (4) de la vanne et la contre-butée (106, 206), de sorte que ledit ressort de rappel est disposé dans la chambre de mélange (114, 214).

10. Vanne thermostatique selon l'une quelconque des revendications 1 à 9, **caractérisée en ce que** le ressort de rappel (205) est supporté sur une zone (266) de la paroi de séparation de la contre-butée (206).
